# EUROPÄISCHE PATENTSCHRIFT

(11) **EP 0 649 011 B1**
(45) Veröffentlichungstag und Bekanntmachung des Hinweises auf die Patenterteilung: **05.08.1998**
(21) Anmeldenummer: 94810584.6
(22) Anmeldetag: 05.10.1994
(51) Int. Cl.: G01L 19/06, G01L 23/10

(54) **Thermo-kompensierte Druckaufnehmer-Membranstruktur**
Temperature compensated diaphragm structure for a pressure transducer
Structure de membrane à compensation de température pour transducteur de pression

(30) Priorität: 13.10.1993 CH 3075/93
(43) Veröffentlichungstag der Anmeldung: 19.04.1995
(73) Patentinhaber: K.K. HOLDING AG, CH-8408 Winterthur (CH)
(72) Erfinder: Brechbühl, Stefan, CH-8570 Weinfelden (CH); Pletscher, Ernst, CH-8460 Marthalen (CH)

(56) Entgegenhaltungen:
- EP-A- 0 200 709

## Beschreibung

Für die Forschung sowie auch für die Überwachung an Brennkraftmaschinen werden Druckaufnehmer verwendet, die in die Brennraumoberfläche montiert werden. Dadurch werden die Membranen derselben nicht nur durch die Druckgase, sondern auch durch Flammenausbreitung harten thermischen Stössen ausgesetzt, die dem effektiven Druckvorgang zusätzliche Fehler überlagern, so dass die Expansionsphasen meist mit erheblichen Fehlern gemessen werden.

Die Konstrukteure von Druckaufnehmern haben deshalb seit Jahren versucht durch wärmeisolierende Deckschichten, durch Hitzeschild-Vorbauten, durch Mehrfachplatten-Membranen die Thermostoss-Effekte auf ein Minimum zu reduzieren. Durch solche Vorbauten wird aber meist zusätzliche Masse vor das Sensorelement aufgebaut, was erhöhte Beschleunigungsfehlsignale ergeben kann, so dass auch Ventilschläge ein Druckfehlersignal liefern.

Aus der EP-A-0200709 ist ein Druckaufnehmer bekannt, bei dem der massiv ausgebildete, zentrale Bereich einer Plattenmembrane nach innen zurückversetzt und über eine Konusfläche mit einem Gehäuse verbunden ist. Auch für diese Konstruktion gilt bezüglich einer grossen Masse das vorstehend Gesagte.

Die erfindungsgemässe thermostoss-kompensierte Membrankonstruktion geht andere Wege,indem sie möglichst wenig volle und damit schwere Teile in die Membrane einbringt. Eine leichte, elastische Konstruktion mit Brückenträgerstruktur, bewirkt durch die thermische Komponente eine Verwerfung der biegeelastischen Zentralplatte, deren Verwerfungsmass so optimiert ist, dass die dadurch entstehenden doppelten Trapeze eine Kompensationswirkung auf das Kraftübertragungselement erzwingen, wodurch der Thermostoss weitgehend kompensiert werden kann. Zudem bewirkt die elastische Gestaltung der vier Hauptelemente der Membranstruktur:
der Aussenhülse
der Ringplatte
der Zentralplatte
und des Ringträgers
mittels definierten Anlenkstellen ein optimales Spannungsverhalten insbesondere auch für Dauerbetriebszustände.

Statt die Membranpartien mit allen möglichen Mitteln vor thermischen Einwirkungen zu schützen, wird gerade die Wirkung der Thermostösse genützt, um mittels thermisch verursachter Verschiebung einen Kompensationseffekt zu erzielen. Die Erfindung geht also ganz neue Wege, indem an einem neu gestalteten Teil der Membranpartie - der Zentralplatte - bewusst thermische Verwerfung ausgenützt wird um mittels intelligentem Stützungselement diese Verwerfung in eine Kompensationsbewegung umzulenken.

Die Merkmale der Erfindung und deren Funktion soll anhand von 14 Figuren dargestellt werden:
- Fig. 1: Membranpartie im Schnitt eines handelsüblichen Druckaufnehmers
- Fig. 2: Gelenkstab Nachbildung der Membranabstützung nach Fig. 1 gemäss (Stand der Technik)
- Fig. 3: Erfindungsgemässe Membranpartie eines thermostosskompensierten Druckaufnehmers im Schnitt
- Fig. 4: Gelenkstab Nachbildung der erfindungsgemässen Membranabstützung nach Fig. 3
- Fig. 5: Optimierte Nachbildung einer erfindungsgemässen Membranabstützung nach Fig. 3
- Fig. 6: Variante einer erfindungsgemässen Membranabstützung
- Fig. 7: Gelenkstab Nachbildung der Membrane nach Fig. 6
- Fig. 8: Erfindungsgemässe Membranpartie im Schnitt mit separater Zentralplatte von aussen verschlossen
- Fig. 9: Variante zu Fig. 8 im Schnitt mit separater Zentralplatte (32) zurückversetzt
- Fig. 10: Erfindungsgemässe Membranpartie mit Abschluss durch elastische Metallscheibe im Schnitt
- Fig. 11: Erfindungsgemässe Membranpartie mit einstückiger Zentralplatte zurückversetzt im Schnitt
- Fig. 12: Gelenkstab Nachbildung der erfindungsgemässen Membranabstützung nach Fig. 11
- Fig. 13: Gelenkstab Nachbildung von Fig. 12 oberes Trapez
- Fig. 14: Gelenkstab Nachbildung von Fig. 12 unteres Trapez

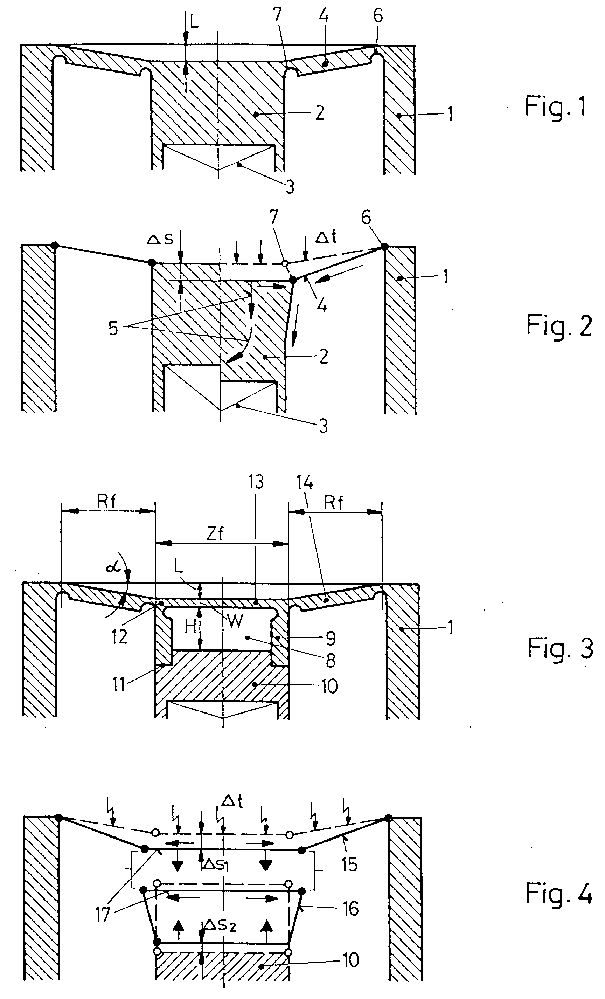

In den Fig. 1 und 2 ist der Stand der Technik aufgezeigt, wie er beispielsweise aus der CH-A-582353 oder aus der EP-A-0200709 bekannt ist.

Fig. 1 zeigt die Membranpartie eines handelsüblichen Druckaufnehmers im Schnitt. An die Aussenhülse 1 schliesst die Membran an, die aus der gegen innen geneigten Ringplatte 4 besteht, welche mit dem Kraftübertragungselement 2 verbunden ist über elastische Anlenkstellen 6 und 7. Der zentrale Teil der Membran ist gleichzeitig Kraftübertragungselement 2 des Aufnehmers, wobei 3 das Sensorelement darstellt, welches die Druckkraft in ein elektrisches Messsignal umsetzt.

Fig. 2 zeigt die Deformation, welche ein Temperaturstoss Δ t in der mit Gelenkstäben dargestellten Membranpartie bewirkt. Durch Δ die Querdehnung der Oberfläche des Kraftübertragungselementes 2 ergibt sich eine Verschiebung Δ S, welche im Sensorelement 3 ein Fehlsignal auslöst, das noch durch die thermische Verlängerung der Ringplatte 4 verstärkt wird. Durch das schnelle Abfliessen des Wärmesprungs von der Oberfläche in das Kraftübertragungselement 2 wird die Oberflächentemperatur wieder abgesenkt und beim nächsten Zyklus trifft wiederum ein voller thermischer Gradient auf die Oberfläche mit entsprechender Fehlsignalwirkung. 5 stellt den direkten Wärmefluss zum Sensorelement dar.

Fig. 3 zeigt ein Beispiel eines erfindungsgemässen thermostosskompensierten Druckaufnehmers. Anstelle der vollen zentralen Membranpartie ist eine dünne Zentralplatte 13 vorgesehen, welche elastisch auf einem Ringträger 9 abgestützt und mit einer Ringplatte 14 über elastische Anlenkstellen 12 verbunden ist. Die Stützstelle 11 des Ringträgers 9 kann eine Verschweissung sein oder eine teilelastische Verbindung. Von Bedeutung ist der Hohlraum 8, der mit einem Gas unter Druck oder mit einem Vakuum versehen sein kann. Die Wandstärke W der Zentralplatte 13, die Höhe H des Hohlraums 8 und die Tiefe L der Zurückversetzung sind konstruktiv optimierte Grössen. Ebenso die Flächen der Zentralplatte Zf und der Ringplatte Rf.

Fig. 4 zeigt eine Wirkungsform der Kompensation mittels Gelenkstäben zum Verständnis der Wirkung des Doppeltrapezes. Dabei ist die Ringplatte 14 mittels Gelenkstab 15, der Ringträger 9 mittels Gelenkstab 16 und die Zentralplatte 13 mittels Gelenkstab 17 dargestellt. Durch Optimierung der Dicke W der Zentralplatte 13 kann erreicht werden, dass sie sich hauptsächlich in der Fläche ausdehnt, wodurch im unteren Trapez eine Kompensationswirkung nach oben entsteht, so dass anstelle der Verschiebung Δ S 1, wie in Fig. 2, ein wesentlich kleinerer Fehler Δ S 2 resultiert.

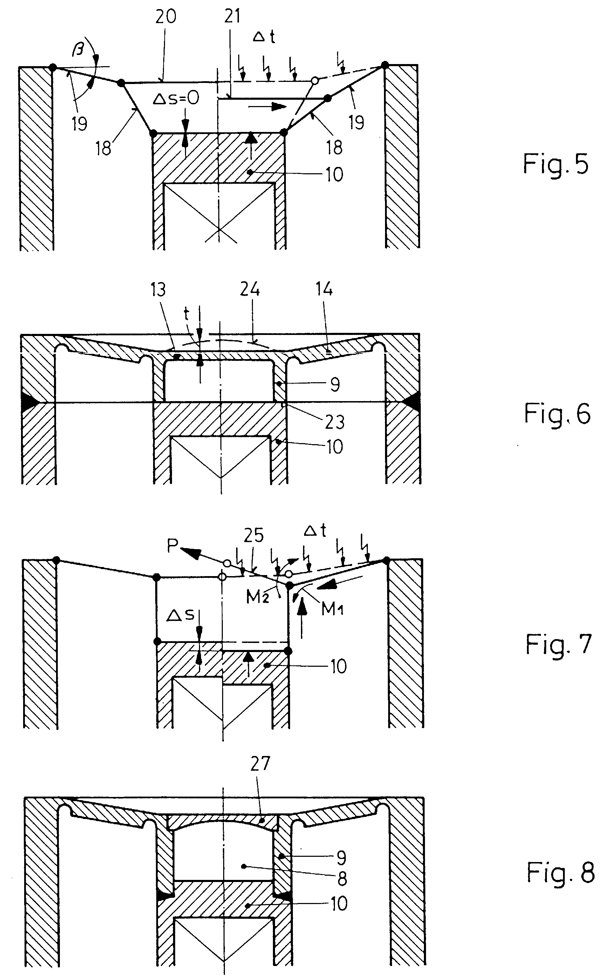

Eine weitere Optimierung ist im Beispiel Fig. 5 gezeigt, wo durch einen konisch gestalteten Ringträger 9 sich besonders günstig wirkende Gelenkstangen 18 bzw. 19 für Ringträger bzw. Ringplatte ergeben. Die Querdehnung der Zentralplatte 13 gemäss Gelenkstab 20,21 bewirkt bei optimiertem Neigungswinkel β der Ringplatte ein so starkes Anheben des Kraftübertragungselementes 10, dass praktisch ein Fehler Δ S = 0 entstehen kann.

Eine weitere Optimierungsvariante ist in Fig. 6 dargestellt, wo die Zentralplatte 13 so optimiert ist, dass sie eine möglichst grosse Verwerfung 24 um die Höhe t erzielt, womit ebenfalls eine Kompensationswirkung erzielt werden kann, wie in Fig. 7 angedeutet. Die Verwerfung bewirkt eine Zugwirkung P des Gelenkstabes 25 wie auch ein Moment M2, wodurch der Boden des Kraftübertragungselementes 10 angehoben und dem Moment M1 der Ringplatte 14 entgegengewirkt wird.

Eingehende Versuche haben ergeben, dass Kombinationen der beiden Einflüsse:
Radial-Ausdehnung und
Achsial-Verwerfung
der Zentralplatte 13 in Wirklichkeit gleichzeitig auftreten und damit das erfindungsgemässe Kompensationsverfahren unterstützen.

In Fig. 8 ist eine Variante der erfindungsgemässen Membrane gezeigt, deren Hohlraum 8 nach aussen geöffnet ist, schlussendlich aber mit einer separat aufgesetzten Zentralplatte 27 verschlossen ist. Diese kann in Versuchsschritten optimiert werden.

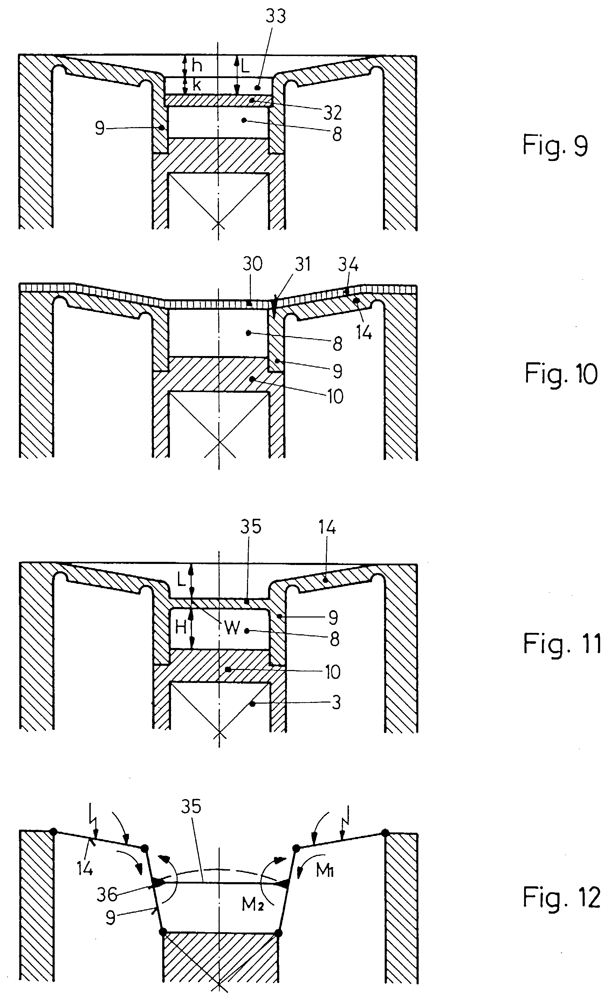

In Fig. 9 ist eine weitere Variante der erfindungsgemässen Membrane gezeigt, wobei die Zentralplatte 32 ebenfalls als optimiertes Separatelement von vorne in den Ringträger 9 eingesetzt ist, um das Mass k zurückversetzt auf die wirksamste Einbautiefe L, die sich ergibt aus dem Mass k und einem Anteil h durch die Neigung der Ringplatte 14. Diese Optimaltiefe könnte z.B. nach Fertigmontage des Aufnehmers durch Versuche abgestimmt werden.

Fig. 10 zeigt eine weitere Variante, in welcher die Ringplatte 14 und der vom Ringträger 9 gebildete Hohlraum 8 durch eine elastische Metallscheibe 34 abgeschlossen sind. Die neu entstandene Zentralplatte 30 kann durch Schweisspunkte 31 befestigt werden.

Fig. 11 zeigt eine weitere Variante mit einer einstückigen zurückversetzten Zentralplatte 35, die fest oder elastisch an den Ringträger 9 angelenkt ist. Die Wandstärke W, wie auch die Tiefe L sind optimierte Masse, die z.B. nach Fertigmontage des Aufnehmers in versuchsmässig auf einem Prüfmotor durchgeführten Einzelschritten angepasst werden können, um für jeden Aufnehmer ein Maximum an Thermostoss-Kompensation bezüglich Amplitude und Zeitverlauf zu erreichen.

Fig. 12 zeigt die Funktionsweise der Ausführung nach Fig. 11 mittels Gelenkstäben. Der Gelenkstab 35 der Zentralplatte ist fest (Fixpunkt 36) am Gelenkstab des Ringträgers 9 angekoppelt, so dass er auf denselben das Moment M2 infolge Aufwerfung übertragen kann. Die Ringplatte 14 erzeugt das Moment M1, entgegengesetzt zu M2.

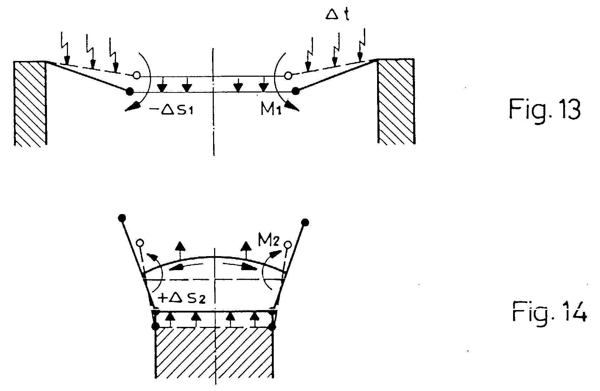

Fig. 13 und 14 zeigen die beiden Trapeze auseinandergezogen von Fig. 12. Durch Optimierung können die beiden Verschiebungen - Δ S1 und + Δ S2 auf gleichen Wert gebracht werden, wobei dann M1 ≅ M2 sein wird, wodurch weitgehende Kompensation des Thermostosses erreicht ist.

Die Schwierigkeit der Thermostoss-Kompensation liegt darin, dass es sich um Verschiebungen im Mikro- und Nanometer-Bereich handelt, die zusätzlich von komplexen Wärmeübergangswerten überlagert sind. Es ist deshalb schwierig, die Thermostoss-Kompensationseffekte für alle Betriebszustände über eine lange Betriebsdauer zu erreichen.

Die Bedeutung der Mittel zur Thermostoss-Kompensation werden deshalb vor allem für Forschungs-Anwendungen gerechtfertigt sein und auch hier, meist für wassergekühlte Druckaufnehmer. Leider setzt die Wasserkühlung der Miniaturisierung Grenzen, so dass neuerdings hochpräzise Forschungs-Druckaufnehmer ohne Wasserkühlung vermehrt eingesetzt werden, wobei Membrandurchmesser bis 3 mm erfolgreich in Betrieb sind.

Die Erkenntnisse der Erfindung, dass ein zentraler Teil, der Gesamtmembrane, der keine Wechselbiegekräfte aufnehmen muss, als Thermoaktuator zur Kompensation des Thermostosses über eine Brückenträgerstruktur mit Doppeltrapezwirkung eingesetzt wird, ist neu.

Durch die Erfindung wird ein massgebender Teil der Membran-Oberfläche auf erheblich höhere Durchschnittstemperatur gesetzt.

Gleichzeitig wird der Wärmefluss durch die gezeigten Massnahmen der Wärmeflussblenden auf die empfindlichen Sensorteile reduziert. Zusätzlich sind keine Schutzschirme, Beläge und Vorbauten nötig, so dass die Beschleunigungsempfindlichkeit der erfindungsgemässen Membranstruktur auf ein Minimum gesenkt werden kann. Ferner ergibt sich mit der Optimierung des kompensationssteuernden Elementes der Zentralplatte 13,27,30,32,35 die neue Möglichkeit der Feinabstimmung durch schrittweise Veränderung der Wandstärke W und/oder der Versetztiefe L der Zentralplatte, ohne andere Einflüsse, wie z.B. die Steifigkeit der Membrankonstruktion oder deren Dauerfestigkeit zu verändern. Die erfindungsgemässe Membrankonstruktion ermöglicht zudem eine schrittweise, im Prüfmotor vorgenommene Abstimmung, wodurch eine optimale Anpassung der Thermostoss-Kompensation erreichbar ist. Damit sind neue Wege zur Präzisionsmessung im Motorenbau in Aussicht gestellt.

### Referenzliste

Fig. 1,2
   - 1: Aussenhülse
   - 2: Kraftübertragungselement
   - 3: Sensorelement
   - 4: Ringplatte
   - 5: Wärmefluss
   - 6: Elast. Anlenkung an Aussenhülse
   - 7: Elast. Anlenkung an Kraftübertragungselement
   - Δ S: Verschiebung infolge Temperaturstoss
   - Δ t: Temperaturstoss
   - L: Mass für die Tiefe
Fig. 3
   - 8: Hohlraum
   - 9: Ringträger
   - 10: Kraftübertragungselement
   - 11: Stützstelle des Ringträgers
   - 12: Anlenkstelle des Ringträgers
   - 13: Zentralplatte
   - 14: Ringplatte
   - α: Neigungswinkel der Ringplatte
   - W: Wandstärke der Zentralplatte
   - H: Höhe des Hohlraums
   - Rf: Fläche der Ringplatte
   - Zf: Fläche der Zentralplatte
Fig. 4
   - 15: Gelenkstab Ringplatte
   - 16: Gelenkstab Ring träger
   - 17: Gelenkstab Zentralplatte
Fig. 5
   - 18: Gelenkstab schräggestellter Ringträger
   - 19: Gelenkstab Ringplatte
   - 20: Gelenkstab Zentralplatte
   - 21: Durch Temperaturstoss verlängerter Gelenkstab der Zentralplatte
   - β: Optimierter Neigungswinkel
Fig. 6
   - 23: Stützstelle des Ringträgers 9
   - 24: Verwerfung der Zentralplatte
   - t: Mass der Zentralplatten-Verwerfung
Fig. 7
   - 25: Gelenkstab der Zentralplatten-Verwerfung
   - M1,M2: Momente
   - P: Zugwirkung infolge Zentralplatten-Verwerfung
Fig. 8
   - 27: Zentralplatte, separat und bündig
Fig. 9
   - 32: Zentralplatte, separat und versetzt
   - h: Anteil der Tiefe L aufgrund der Ringplatten-Neigung
   - k: Mass für die Versetzung der Zentralplatte
Fig. 10
   - 30: Zentralplatte
   - 31: Punktschweissung
   - 34: Metallscheibe
Fig. 11
   - 35: Zentralplatte
Fig. 12
   - 36: Fest angelegter Punkt
   - M1: Moment vom Temperaturstoss
   - M2: Gegenmoment infolge Aufwerfung der Zentralplatte

## Patentansprüche

1. Thermostoss-kompensierte Druckaufnehmer-Membranstruktur, umfassend eine Aussenhülse (1), eine bezüglich der Thermostoss-Kompensationswirkung optimierbare Zentralplatte (13), eine Ringplatte (14), die mit der Aussenhülse (1) und der Zentralplatte (13) verbunden ist, und einen Ringträger (9), der die Zentralplatte (13) und die Ringplatte (14) mit einem Kraftübertragungselement (10) verbindet, wodurch ein durch die Zentralplatte (13), den Ringträger (9) und das Kraftübertragungselement (10) begrenzter Hohlraum (8) gebildet ist, und wobei die Aussenhülse (1), die Zentralplatte (13), die Ringplatte (14) und der Ringträger (9) in einer solchen Form miteinander verbunden sind, dass sie zusammen eine Brückenträgerstruktur ergeben.

2. Thermostoss-kompensierte Druckaufnehmer-Membranstruktur nach Anspruch 1, wobei die Membranstruktur nach innen um einen Winkel a geneigt ist, und wobei die Ringplatte (14) elastisch an die Aussenhülse (1) und an den Ringträger (9) angelenkt ist, der mit dem Kraftübertragungselement (10) verbunden ist.

3. Thermostoss-kompensierte Druckaufnehmer-Membranstruktur nach einem der Ansprüche 1 und 2, wobei die Zentralplatte (13,35) elastisch an den Ringträger (9) angelenkt ist und an der Aussenseite bündig in die geneigte Ringplatte (14) übergeht.

4. Thermostoss-kompensierte Druckaufnehmer-Membranstruktur nach einem der Ansprüche 1 und 2, wobei die Zentralplatte (13,35) fest an den Ringträger (9) angelenkt ist und an der Aussenseite bündig in die geneigte Ringplatte (14) übergeht.

5. Thermostoss-kompensierte Druckaufnehmer-Membranstruktur nach einem der Ansprüche 1 und 2, wobei die Zentralplatte (27,32) als Separatstück von vorne auf den Ringträger bündig mit der Ringplatte (14) aufgesetzt, bzw. um das Mass L zurückversetzt montiert ist.

6. Thermostoss-kompensierte Druckaufnehmer-Membranstruktur nach einem der Ansprüche 1 bis 4, wobei die Zentralplatte (27,32) einstückig mit der Ringplatte (14) und dem Ringträger (9) ausgebildet und um das Mass L zurückversetzt ist, und wobei die Dicke (W) so optimiert ist, dass der Thermostossfehler möglichst klein ist.

7. Thermostoss-kompensierte Druckaufnehmer-Membranstruktur nach einem der Ansprüche 1 bis 3, wobei die Anlenkstellen (12) so gestaltet sind, dass eine effiziente Wärmebarriere zum zentralen Sensorübertragungselement (10) entsteht, wodurch die Zentralplatte (13) eine erhöhte Durchschnittstemperatur annimmt, wodurch die Gradienten zu den zyklischen Wärmestössen geringer werden, was wesentlich zur Thermostoss-Kompensation beiträgt.

8. Thermostoss-kompensierte Druckaufnehmer-Membranstruktur nach einem der Ansprüche 1 bis 4, wobei der Ringträger (9) der Zentralplatte (13) auf das Kraftübertragungselement (10) aufgeschweisst ist.

9. Thermostoss-kompensierte Druckaufnehmer-Membranstruktur nach einem der Ansprüche 1 bis 8, wobei der Ringträger (9) der Zentralplatte (13) durch mechanische Vorspannung auf das Kraftübertragungselement (10) gepresst wird.

10. Thermostoss-kompensierte Druckaufnehmer-Membranstruktur, nach einem der Ansprüche 1 bis 5, wobei die Zentralplatte (30) als Teil einer die ganze Frontfläche überdeckenden Metallscheibe (34) ausgebildet ist, die durch Schweisspunkte (31) entsprechend abgestützt sein kann.

11. Verfahren zur Optimierung der Thermostoss-Kompensation einer Druckaufnehmer-Membranstruktur gemäss einem der Ansprüche 1 bis 10, wobei die Druckaufnehmer-Membranstruktur in einem Motor getestet wird und danach die Wandstärke (W) der Zentralplatte (13) schrittweise durch Materialabtragung verändert wird.

12. Verfahren zur Optimierung der Thermostoss-Kompensation einer Druckaufnehmer-Membranstruktur gemäss einem der Ansprüche 1 bis 10, wobei die Druckaufnehmer-Membranstruktur in einem Motor getestet wird und die Tiefe (L) der Zurücksetzung der Oberfläche der Zentralplatte (13,32) von der Frontfläche der Membranstruktur schrittweise optimiert wird.

## Claims

1. Thermoshock-compensated pressure transducer diaphragm structure comprising an outer sleeve (1), a central plate (13) optimized for the thermoshock compensation effect, an annular plate (14) joined to the outer sleeve (1) and the central plate (13), and an annular support (9) joining the central plate (13) and annular plate (14) to a force transmitting element (10), so that a cavity (8) bounded by the central plate (13), annular plate (9) and force transmitting element (10) is formed. The central plate (13), annular plate (14) and annular support (9) are joined in such a way that they form a bridge girder structure.

2. Thermoshock-compensated pressure transducer diaphragm structure according to claim 1, the diaphragm structure being inclined inwards at an angle a and the annular plate (14) being jointed elastically to the outer sleeve (1) and the annular support (9), which is joined to the force transmission element (10).

3. Thermoshock-compensated pressure transducer diaphragm structure according to one of claims 1 and 2, with the central plate (13, 35) jointed elastically to the annular support (9) and on the outside merging flush into the inclined annular plate (14).

4. Thermoshock-compensated pressure transducer diaphragm structure according to one of claims 1 and 2, with the central plate (13, 35) jointed rigidly to the annular support (9) and on the outside merging flush into the inclined annular plate (14).

5. Thermoshock-compensated pressure transducer diaphragm structure according to one of claims 1 and 2, with the central plate (27, 32) mounted as a separate part from the front on the annular support, flush with the annular plate (14) or set back by the diamension L.

6. Thermoshock-compensated pressure transducer diaphragm according to one of claims 1 to 4, with the central plate (27, 32) forming one piece together with the annular plate (14) and annular support (9) and set back by the dimension L, and the thickness (W) optimized so that the thermoshock error is as small as possible.

7. Thermoshock-compensated pressure transducer diaphragm according to one of claims 1 to 3, with the articulations (12) constructed so that an efficient heat barrier against the central sensor transmission element (10) results, causing the central plate (13) to assume an increased average temperature so that the gradients to the cyclic thermal shocks are reduced, contributing substantially to the thermoshock compensation.

8. Thermoshock-compensated pressure transducer diaphragm according to one of claims 1 to 4, with the annular support (9) of the central plate (13) welded onto the force transmission element (10).

9. Thermoshock-compensated pressure transducer diaphragm according to one of claims 1 to 8, with the annular support (9) of the central plate (13) pressed onto the force transmission element (10) by mechanical preload.

10. Thermoshock-compensated pressure transducer diaphragm according to one of claims 1 to 5, with the central plate (30) forming part of the metal disk (34) covering the entire front surface and appropriately supportable by welding spots (31).

11. Procedure for optimizing the thermoshock compensation of a pressure transducer diaphragm according to one of claims 1 to 10, whereby the pressure transducer diaphragm structure is tested in a motor, after which the wall thickness (W) of the central plate (13) is altered in stages by removing material.

12. Procedure for optimizing the thermoshock compensation of a pressure transducer diaphragm according to one of claims 1 to 10, whereby the pressure transducer diaphragm structure is tested in a motor and the depth (L) of the setback of the surface of the central plate (13, 32) from the front surface of the diaphragm structure is optimized in stages.

## Revendications

1. Structure de membrane pour capteur de pression à compensation de chocs thermiques comprenant une douille extérieure (1), une plaque centrale (13) optimisable quant à l'effet de compensation des chocs thermiques, une plaque annulaire (14) relié à la douille extérieure (1) et à la plaque centrale (13) et un support cylindrique (9) qui relie la plaque centrale (13) et la plaque annulaire (14) à un élément de transmission des efforts (10) constituant de la sorte une cavité (8) limitée par la plaque centrale (10), le support cylindrique (9) et l'élément de transmission de force (10) et dans laquelle la douille extérieure (1), la plaque centrale (13), la plaque annulaire (14) et le support cylindrique (9) sont reliés les uns aux autres de telle manière à constituer ensemble une structure en treillis.

2. Structure de membrane pour capteur de pression à compensation des chocs thermiques selon revendication 1, dans laquelle la structure de membrane est inclinée vers l'intérieur d'un angle α et dans laquelle la plaque annulaire (14) est accouplée de façon élastique à la douille extérieure (1) et au support cylindrique (9) qui est relié à l'élément de transmission des efforts (10).

3. Structure de membrane pour capteur de pression à compensation des chocs thermiques selon l'une des revendications 1 et 2, la plaque centrale (13, 35) étant accouplée de façon élastique au support cylindrique (9) et venant affleurer sur sa face extérieure à la plaque annulaire inclinée (14).

4. Structure de membrane pour capteur de pression à compensation des chocs thermiques selon l'une des revendications 1 et 2, la plaque centrale (13, 35) étant accouplée de façon rigide au support cylindrique (9) et venant affleurer sur sa face extérieure à la plaque annulaire inclinée (14).

5. Structure de membrane pour capteur de pression à compensation de chocs thermiques selon l'une des revendications 1 et 2, caractérisée en ce que la plaque centrale (27, 32) est installée en tant que pièce séparée par l'avant dans le support cylindrique (9) pour venir affleurer avec la plaque annulaire (14) resp. être décalée de la distance L par rapport à cette dernière selon le cas.

6. Structure de membrane pour capteur de pression à compensation de chocs thermiques selon l'une des revendications 1 à 4, la plaque centrale (35) positionnée en retrait de la distance L constituant une seule pièce avec la plaque annulaire (14) et le support cylindrique (9) et son épaisseur W étant optimisée de sorte à réduire au maximum l'erreur dûe au choc thermique possible.

7. Structure de membrane pour capteur de pression à compensation de chocs thermiques selon l'une des revendications de brevet 1 à 3, les points d'articulation (12) étant aménagés de manière à constituer une barrière thermique efficace devant l'élément de transmission du capteur (10), la plaque centrale (13) prenant alors une température moyenne plus élevée ce qui permet d'atténuer les gradients de température des chocs thermiques cycliques ce qui contribue de façon notable à la compensation des chocs thermiques.

8. Structure de membrane pour capteur de pression à compensation de chocs thermiques selon l'une des revendications de brevet 1 à 4, le support cylindrique (9) de la plaque centrale (13) étant soudé sur l'élément de transmission de force (10).

9. Structure de membrane pour capteur de pression à compensation de chocs thermiques selon l'une des revendications de brevet 1 à 4, le support cylindrique (9) de la plaque centrale (13) étant pressé contre l'élément de transmission de force par précontrainte mécanique.

10. Structure de membrane pour capteur de pression à compensation des chocs thermiques selon l'une des revendications 1 à 5, la plaque centrale (30) faisant partie intégrante d'une rondelle métallique (34) recouvrant toute la partie frontale et qui peut être fixée par des points de soudure (31).

11. Procédé pour optimiser la compensation aux chocs thermiques d'une structure de membrane pour capteur de pression selon l'une des revendications 1 à 10, caractérisé en ce que la structure de membrane pour capteur de pression est essayée dans un moteur et que l'épaisseur de paroi (W) de la plaque centrale (13) est progressivement modifiée par élimination de matériel.

12. Procédé pour optimiser la compensation aux chocs thermiques d'une structure de membrane pour capteur de pression selon l'une des revendications 1 à 10, caractérisé en ce que la structure de membrane pour capteur de pression est essayée dans un moteur et que la profondeur (L) du retrait de la surface de la plaque centrale (13, 32) par rapport à la face frontale de la structure de membrane se trouve successivement optimisée.
